# EUROPÄISCHE PATENTSCHRIFT

(11) **EP 3 119 617 B1**
(45) Veröffentlichungstag und Bekanntmachung des Hinweises auf die Patenterteilung: **14.03.2018**
(21) Anmeldenummer: 15700994.5
(22) Anmeldetag: 20.01.2015
(51) Int. Cl.: B60C 11/16

(54) **SPIKE UND FAHRZEUGREIFEN MIT EINEM SOLCHEN SPIKE**
SPIKE AND PNEUMATIC TIRE WITH SUCH A SPIKE
CRAMPON ET PNEUMATIQUE AVEC CELLE-CI

(30) Priorität: 21.03.2014 DE 102014205353
(43) Veröffentlichungstag der Anmeldung: 25.01.2017
(73) Patentinhaber: Continental Reifen Deutschland GmbH, 30165 Hannover (DE)
(72) Erfinder: BRANDAU, Christian, 31542 Bad Nenndorf (DE); SCHLITTENHARD, Jan, 30900 Wedemark (DE)
(74) Vertreter: Finger, Karsten
(86) Internationale Anmeldenummer: PCT/EP2015/050915
(87) Internationale Veröffentlichungsnummer: WO 2015/139860

(56) Entgegenhaltungen:
- CN-A- 101 269 613
- RU-C1- 2 148 498

## Beschreibung

Die Erfindung betrifft einen Spike für einen Fahrzeugreifen mit einem Spikekörper und einem in diesen eingesetzten Spikepin, welcher einen aus dem Spikekörper zumindest zum Teil herausragenden oder diesen überragenden Oberteil mit einer eine Abrollfläche bildenden Oberseite aufweist, wobei der Oberteil ein Körper ist, dessen Mantelfläche der Außenkontur der Oberseite folgt, wobei der Oberteil des Spikepins ein in Draufsicht auf seine Oberseite langgestreckter Körper ist, mit einer Länge, die das 1,3- bis 2,4-Fache seiner größten Breite beträgt, welcher Körper über zumindest die Hälfte seiner Länge kontinuierlich breiter wird und entweder keine oder nur eine Symmetrieebene aufweist, welche den Oberteil bzw. den Spikepin senkrecht zur Oberseite sowie in Längsrichtung des Oberteiles bzw. Spikepins halbiert.

Spikes für den Laufstreifen eines Fahrzeugreifens sind in unterschiedlichen Ausführungsvarianten bekannt. Spikes bestehen üblicherweise aus einem Spikekörper, der in das Gummimaterial des Laufstreifens des Fahrzeugreifens eingesetzt wird, und einem Spikepin, welcher einen Oberteil und einen Unterteil aufweist, wobei der Unterteil in den Spikekörper eingesetzt und hier form- und/oder kraftschlüssig gehalten ist, und wobei der Oberteil aus dem Spikekörper herausragt. Beim Abrollen des Reifens kommt der Oberteil des Spikepins mit dem Untergrund in Kontakt und sorgt für eine verbesserte Untergrundhaftung, insbesondere auf Eis und Schnee.

Ein Spike der eingangs genannten Art ist beispielsweise aus der CN 101 269 613 A bekannt. Dieser Spike weist einen Spikepin mit zwei zueinander orthogonal stehenden Symmetrieebenen auf und ist in Draufsicht beispielsweise in Form eines langgestreckten Sechseckes ausgeführt. Aus der RU 2 148 498 C1 ist ein Spike mit einem Spikepin, welcher in Draufsicht beispielsweise dreieckig, rechteckig, ellipsenförmig, trapezförmig oder halbkreisförmig ist, bekannt.

Aus der EP 1 661 734 B1 sind weitere Ausführungsvarianten von Spikepins bekannt. Die Spikepins sind durch eine Ausgestaltung in Form von Quadern und anderen geometrischen Körpern und derart ausgeführt, dass sie zumindest zwei Symmetrieebenen aufweisen. Bei runden, insbesondere zylindrischen Formen gibt es eine Vielzahl von Symmetrieebenen. Da Spikepins bei der Benutzung den Straßenabrieb erhöhen, ist es von Vorteil, die Spikepins mit einer möglichst geringen Masse auszuführen. Dabei besteht die Gefahr, dass Maßnahmen zur Masse- bzw. Gewichtsreduktion auch mit einer unerwünschten Reduktion des Schnee- und Eisgriffes einhergehen.

Der Erfindung liegt somit die Aufgabe zugrunde, einen Spikepin mit verringerter Masse zur Verfügung zu stellen, der trotz verringerter Masse derart im Laufstreifen eines Reifens positioniert werden kann, dass seine Schnee- und Eisgriffperformance zumindest jener von herkömmlich ausgeführten Spikepins entspricht. Der Erfindung liegt daher auch die Aufgabe zugrunde, einen Fahrzeugreifen mit optimal positionierten erfindungsgemäßen Spikes zur Verfügung zu stellen.

Was den Spike betrifft wird die gestellte Aufgabe erfindungsgemäß dadurch gelöst, dass der Oberteil des Spikepins über zumindest 65 % seiner Länge kontinuierlich breiter wird.

Was den Fahrzeugreifen betrifft, wird die gestellte Aufgabe erfindungsgemäß dadurch gelöst, dass der Spike derart im Laufstreifen positioniert ist, dass die Längserstreckung des Oberteils des Spikepins der Querrichtung des Laufstreifens zugeordnet ist.

Bei erfindungsgemäß ausgeführten Spikepins kann daher gegenüber herkömmlich ausgeführten Spikepins der Masseanteil in einer Erstreckungsrichtung reduziert werden, da erfindungsgemäß ausgeführte Spikepin-Oberteile eine ausgeprägte Längserstreckung mit maximal einer Symmetrieebene besitzen und über einen Großteil ihrer Längserstreckung breiter werden. Diese besondere Gestalt des Oberteils des Spikepins ermöglicht Positionierungen im Laufstreifen, die bestimmte Wirkungen/Effekte haben, etwa auf die Seitenführung, je nachdem, wie der Spikepin bezüglich seiner Längserstreckung und seinem breiteren/schmäleren Bereich zur Umfangs- und Querrichtung des Laufstreifens positioniert wird. Besonders vorteilhaft ist eine Anordnung der Spikepins, bei der sich der Oberteil parallel oder nahezu parallel zur Laufstreifenquerrichtung erstreckt, da durch diese Anordnung Traktion und Bremsen auf Eis merklich verbesserbar sind.

Gemäß einer bevorzugten Ausführungsvariante der Erfindung ausgeführte Oberteile von Spikepins weisen zumindest drei Eckbereiche auf, wobei zumindest ein Eckbereich, insbesondere sämtliche Eckbereiche, von einer Rundung begrenzt ist bzw. sind. Diese Massnahme reduziert die Gefahr von Absplitterungen an Ecken des Pin-Oberteils.

Bei einer Ausführungsvariante der Erfindung weist der Oberteil an einem seiner der Längserstreckung zugeordneten Enden eine Breite auf, die zumindest im Wesentlichen seiner größten Breite entspricht, wobei der Oberteil in diesem Bereich von einer Begrenzungsfläche begrenzt ist, die, in Draufsicht betrachtet, im Wesentlichen senkrecht zur Symmetrieebene des Oberteils verläuft. Auch diese Ausführung hat bei besonderen Positionierungen des Spikes im Laufstreifen Vorteile.

Besonders günstig auf den für Schnee-und Eisgriff wirkt sich die Massnahme aus, zumindest eine der Begrenzungsflächen des Oberteils konvex oder konkav zu wölben Auch diesbezüglich ist die Ausrichtung der konkav oder konvex gewölbten Begrenzungsflächen bei im Laufstreifen positioniertem Spike von Bedeutung. In diesem Zusammenhang ist es für einen guten Eisgriff vor allem von Vorteil, wenn der Oberteil beidseitig seiner Symmetrieebene Begrenzungsflächen aufweist, die konkav gewölbt sind.

Je nachdem, in welcher Position erfindungsgemäße Spikes im Laufstreifen eines Fahrzeugluftreifens verankert werden, sind für den Eisgriff, die Brems- und Traktionseigenschaften sowie die Seitenführung bestimmte Geometrien des Oberteils , beispielsweise als in Draufsicht dreieckähnlich, deltoidförmig oder tropfenähnlich und mit einer Symmetrieebene, besonders vorteilhaft.

Wie bereits erwähnt betrifft die Erfindung auch Fahrzeugluftreifen mit einem Laufstreifen, in welchem erfindungsgemäß ausgeführte Spikes eingesetzt sind. Die bevorzugte

Orientierung erfindungsgemäßer Spikes im Laufstreifen ist in Querrichtung des Laufstreifens, also derart, dass die Symmetrieebene des Spikepins bzw. die Richtung seiner Längserstreckung parallel zur Querrichtung ausgerichtet ist. "In Querrichtung" umfasst auch Abweichungen von der exakten Querrichtung von bis zu ± 35 °.

Bei Fahrzeugluftreifen mit einem asymmetrisch ausgeführten Laufstreifen, welcher einen der Fahrzeuglängsachse zugewandten Innenbereich und einen von dieser abgewandten Außenbereich aufweist, wobei Außen- und Innenbereich unterschiedliche Profilstrukturen besitzen, werden die Spikes im Außenbereich des Laufstreifens vorzugsweise derart angeordnet, dass die Spikepins mit ihrer breiteren Seite dem Laufstreifenrand näher sind. Diese Anordnung der erfindungsgemäßen Spikes ist besonders für die Seitenführungseigenschaften des Reifens von Vorteil.

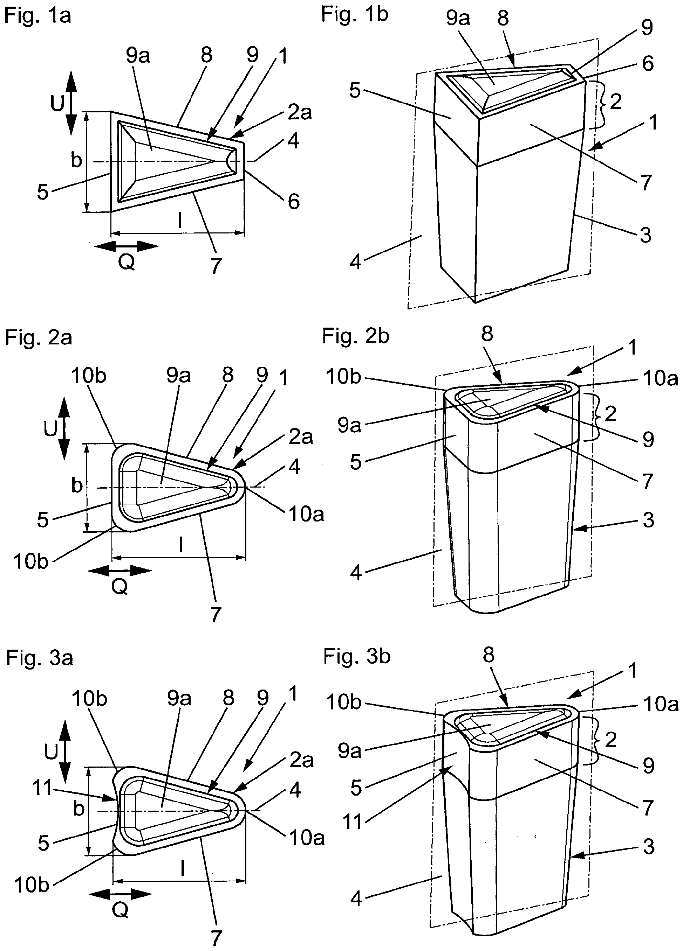

Weitere Merkmale, Vorteile und Einzelheiten der Erfindung werden nun anhand der Zeichnung, die mehrere Ausführungsbeispiele darstellt, näher beschrieben. Dabei zeigen
Fig. 1a und Fig. 1b eine erste Ausführungsform eines erfindungsgemäßen Spikepins,
Fig. 1a in Draufsicht und Fig. 1b in Schrägansicht, und
die Figuren 2a und 2b, 3a und 3b, 4a und 4b, 5a und 5b, 6a und 6b, 7a und 7b, 8a und 8b sowie 9a und 9b in zu den Figuren 1a und 1b analogen Darstellungen weitere Ausführungsvarianten eines erfindungsgemäßen Spikepins.

Die Erfindung befasst sich mit einer besonderen Ausgestaltung von Spikepins. Wie an sich bekannt, weisen Spikes für den Laufstreifen von Fahrzeugreifen einen in den Figuren nicht dargestellten Spikekörper, der wenigstens teilweise, insbesondere komplett, in das Gummimaterial des Laufstreifens des Fahrzeugreifens eingefügt ist, und einen Spikepin auf, welcher form- und/oder kraftschlüssig im Spikekörper gehalten ist und jenen Teil des Spikes bildet oder aufweist, welcher aus dem Gummimaterial des Laufstreifens herausragt. Der Spikepin besteht vorzugsweise aus Hartmetall, Sintermetall oder dergleichen, der Spikekörper üblicherweise ebenfalls aus Metall oder aus Kunststoff oder anderen verschleißfesten Werkstoffen.

Bei sämtlichen in den Figuren dargestellten Ausführungsformen ist der Spikepin in einer bevorzugten "Einbauposition" im Laufstreifen dargestellt, es sind daher mit dem Pfeil Q die Querrichtung und mit dem Pfeil U die Umfangsrichtung des Laufstreifens bezeichnet. Der Spikepin 1 weist einen Oberteil 2 und einen im Spikekörper zu verankernden Unterteil 3 auf. Der Oberteil 2 ist jener Teil des Spikepins 1, welcher aus dem Spikekörper herausragt, wobei auch ein kurzer Abschnitt des Unterteils 3 den Spikekörper überragen kann. Bei sämtlichen Ausführungsformen ist der Unterteil 3 beispielhaft derart ausgeführt, dass seine geometrische Ausgestaltung mit jener des Oberteils 2 zumindest weitgehend übereinstimmt, wobei sich seine Querschnittsfläche über seiner Erstreckung vom Oberteil 2 weg entweder kontinuierlich verringert oder mit jener des Oberteils 2 übereinstimmt. Der Oberteil 2 weist eine über seine radiale Erstreckung - bezogen auf die Drehachse des Reifens - zumindest im Wesentlichen gleichbleibende Geometrie auf und ist daher mit konstantem Querschnitt oder leicht konisch ausgebildet. Die eine Abrollfläche bildende Oberseite 2a des Oberteils 2 weist eine Außenkontur auf, die sich in der äußeren Umfangsfläche - der Mantelfläche - des Oberteils 2 fortsetzt.

Der Oberteil 2 weist in Draufsicht (diese entspricht der Ansicht auf die Oberseite 2a) eine Gesamtlänge 1 und eine größte Breite b auf, wobei die Länge 1 zwischen 2 mm und 4 mm und das 1,3- bis 2,4-Fache der Breite b beträgt. Der Oberteil 2 besitzt eine Höhe von 0,5 mm bis 1,5 mm. Über mehr als 50 %, insbesondere 65 %, seiner Länge 1 wird der Spikepin 1, insbesondere kontinuierlich, breiter. Spikes mit erfindungsgemäßen Spikepins 1 werden bevorzugt derart im Laufstreifen eines Reifens positioniert, dass die größere Erstreckung des Spikepins 1 bzw. seines Oberteils 2 der Querrichtung Q (axialen Richtung) des Laufstreifens zugeordnet ist, wobei dies so zu verstehen ist, dass der Spikepin 1 bezüglich seiner Längserstreckung parallel zur Querrichtung Q oder bis zu einem Winkel von ± 35 ° von der Querrichtung Q abweichend im Laufstreifen eingebaut wird. Erfindungsgemäß gestaltete Spikepins 1 bzw. ihre Oberteile 2a besitzen ferner entweder keine Symmetrieebene oder eine einzige Symmetrieebene 4, welche senkrecht zur Oberseite 2a verläuft, den Spikepin 1 bzw. seinen Oberteil 2 in seiner Längsrichtung "halbiert" und bei im Laufstreifen eingesetztem Spike eine in radialer Richtung verlaufende Ebene ist.

Fig. 1a und 1b zeigen eine Ausführungsform des Spikepins 1 mit einem Oberteil 2 mit einer viereckigen Oberseite 2a und mit vier in radialer Richtung verlaufenden Begrenzungsflächen 5, 6, 7 und 8, wobei die längsseitigen Begrenzungsflächen 5 und 6 parallel zueinander verlaufen und unterschiedlich lang sind. Die Begrenzungsflächen 7 und 8 verlaufen spiegelbildlich zur Symmetrieebene 4 und schließen mit der längeren längsseitigen Begrenzungsfläche 5 jeweils einen spitzen Winkel und mit der kürzeren längsseitigen Begrenzungsfläche 6 jeweils einen stumpfen Winkel ein. Die Oberseite weist daher die Gestalt eines gleichschenkeligen, an einem Eck abgeschnittenen Dreieckes auf. Auf der Oberseite 2a des Oberteils 2 befindet sich eine flache Wölbung 9, deren Außenkontur parallel zur Außenkontur der Oberseite 2a des Oberteils 2 und gegenüber dieser etwas nach innen versetzt verläuft und die ein ebenes Plateau 9a aufweist. Die Höhe der Wölbung 9 beträgt 0,1 mm bis 0,5 mm. Das Plateau 9a der Wölbung 9 weist ebenfalls eine Außenkontur auf, die parallel zur Außenkontur der Oberseite 2a des Oberteils 2 verläuft.

Fig. 2a und 2b zeigen eine zur Ausführungsform gemäß Fig. 1a und 1b ähnliche Ausführungsform. Der in Draufsicht im Wesentlichen dreieckige, und zwar einem gleichschenkeligen Dreieck ähnliche, Oberteil 2 ist ein Körper mit zwei unter einem spitzen Winkel zueinander und beidseitig und symmetrisch zur Ebene 4 verlaufenden Begrenzungsflächen 7, 8, die einerends über eine Rundung 10a miteinander verbunden sind und anderends ebenfalls über je eine Rundung 10b in die dritte Begrenzungsfläche 5 übergehen. Auf der Oberseite 2a des Oberteils 2 befindet sich eine Wölbung 9 mit einem Plateau 9a, analog zur ersten Ausführungsform. Durch die Rundungen 10a, 10b wird einem Abbrechen von Pinmaterial in diesen Bereichen entgegengewirkt, da Spannungsspitzen abgebaut werden.

Die in Fig. 3a und 3b gezeigte Ausführungsform unterscheidet sich von jener gemäß Fig. 2a und 2b darin, dass die Begrenzungsfläche 5 konkav gewölbt ist. Bei einer Anordnung des Spikes, bei der diese Begrenzungsfläche 5 parallel zur Umfangsrichtung U des Laufstreifens orientiert ist, bewirkt die Wölbung der Begrenzungsfläche 5 eine Erhöhung des Griffes des Spikepins 1 auf Eis durch die Optimierung des Widerstandes des Pins bei Seitenkräften.

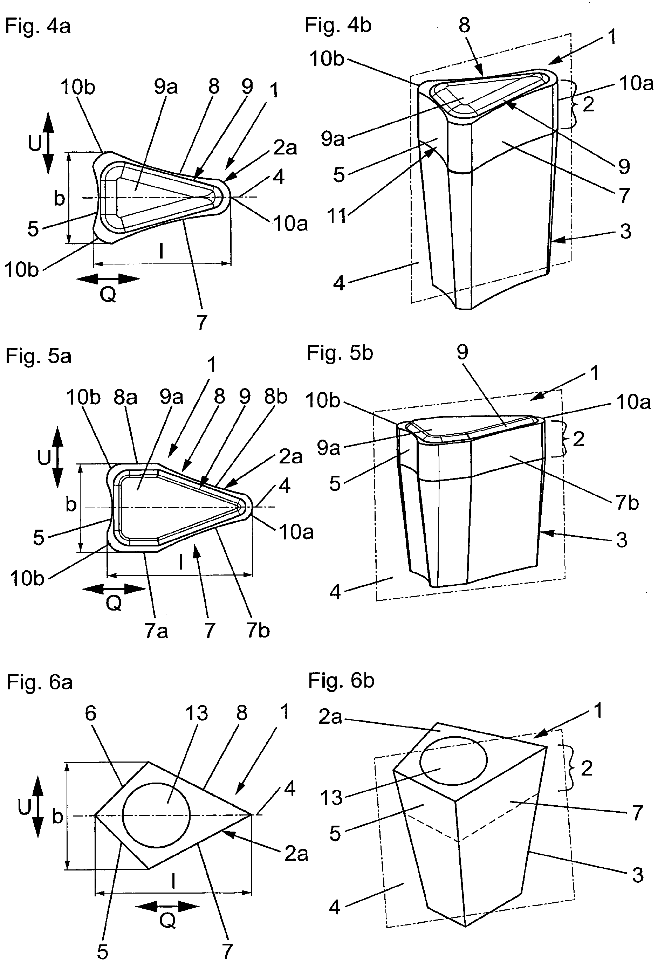

Die in Fig. 4a und 4b gezeigte Ausführungsvariante entspricht weitgehend der in den Fig. 3a und 3b gezeigten, mit dem Unterschied, dass neben der Begrenzungsfläche 5 auch die weiteren Begrenzungsflächen 7 und 8, im Wesentlichen über ihre gesamte Länge, leicht konkav gewölbt sind. Diese Maßnahme kann vor allem den Griff auf Eis bei einwirkenden Traktionskräften und beim Bremsen unterstützen, wenn der Spike in der gezeigten Lage im Laufstreifen verankert ist.

Eine Abwandlung der in Fig. 4a und 4b gezeigten Ausführungsform zeigen die Figuren 5a und 5b. Die Begrenzungsflächen 7 und 8 setzen sich jeweils aus zwei Abschnitten 7a, 7b und 8a, 8b zusammen, wobei die an die Begrenzungsfläche 5 über Rundungen 10b anschließenden Abschnitte 7a und 8a parallel zueinander verlaufen und die Abschnitte 7b und 8b, welche leicht nach innen gewölbt sind, in Richtung Rundung 10a zusammenlaufen. Die Symmetrieebene 4 bewirkt auch hier eine spiegelbildliche Anordnung der Begrenzungsflächen 7 und 8. Auf der Oberseite 2a befindet sich bei den Ausführungsformen gemäß Fig. 2a und 2b, 3a und 3b sowie 4a und 4b jeweils eine zumindest im Wesentlichen der Außenkontur der Oberseite 2a folgende Wölbung 9 mit einem Plateau 9a.

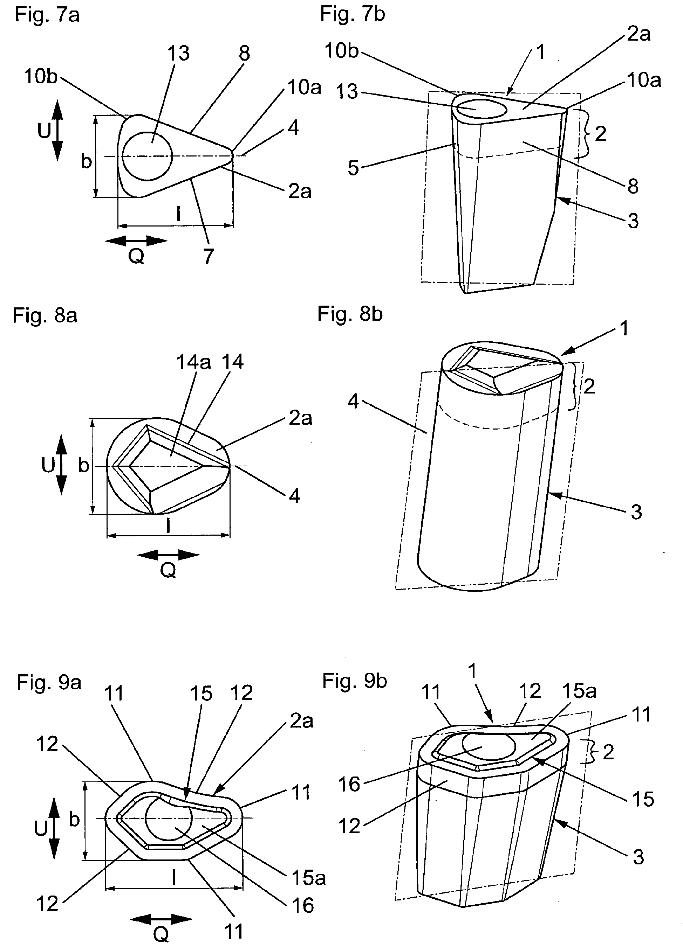

Bei den in den Figuren 6a und 6b sowie 7a und 7b gezeigten Ausführungsformen ist die flache Wölbung 13 auf der Oberseite 2a des Oberteils 2 des Spikepins 1 in Draufsicht kreisrund und ohne Plateau ausgeführt. Der Oberteil 2 des in Fig. 6a und 6b gezeigten Spikepins 1 besitzt in Draufsicht die Gestalt eines Deltoids, bei welchem entlang der Symmetrieachse die Symmetrieebene 4 verläuft und weist daher vier Begrenzungsflächen 5, 6, 7 und 8 auf. Der in den Figuren 7a und 7b gezeigte Spikepin 1 weist einen Oberteil 2 mit einer Oberseite 2a in einer einem gleichschenkeligen Dreieck ähnlichen Gestalt und mit gerundeten Eckbereichen 10a, 10b, schenkelseitigen Begrenzungsflächen 7 und 8 und einer konvex gewölbten längsseitigen Begrenzungsfläche 5 auf. Die in den Figuren 6a und 6b sowie 7a und 7b dargestellten Spikepins 1 weisen eine sich Richtung Unterteil 3 kontinuierlich verjüngende Gestalt auf.

Fig. 8a und 8b zeigen einen Spikepin 1, dessen Oberteil 2 eine Oberseite 2a mit einer gerundeten, symmetrischen, tropfenähnlichen Ausgestaltung aufweist. Auf der Oberseite 2a des Oberteils 2 befindet sich eine Wölbung 14 in der Form eines Deltoids mit einem deltoidförmigen Plateau 14a. Der Unterteil 3 und der Oberteil 2 besitzen eine übereinstimmende Gestalt mit konstanten Querschnitten.

Der in Fig. 9a und 9b gezeigte Spikepin 1 weist keine Symmetrieebene auf, der Oberteil 2 hat eine Oberseite 2a, deren Außenkontur unregelmäßig gestaltet ist mit gerundeten Eckbereichen versehen ist. Der Oberteil besitzt daher einige Rundungen 11 und mehrere Begrenzungsflächen, die teilweise gewölbt sind. Auf der Oberseite 2a des Oberteils 2 ist eine flache, der Außenkontur des Oberteils 2 folgende Wölbung 15 mit einer auf ihrem Plateau 15a aufgesetzten, zweiten, kleineren kreisrunden und ebenfalls flachen Wölbung 16.

Gemäß der Erfindung ausgeführte Spikepins eignen sich besonders für eine Verwendung bei Reifen mit asymmetrisch gestalteten Laufstreifen. Als asymmetrisch werden Laufstreifen bezeichnet, die in den beiden durch den Reifenäquator getrennten Laufstreifenhälften unterschiedlich gestaltete Profilstrukturen aufweisen, sodass diese Reifen mit einem definierten Außenbereich und einem definierten Innenbereich im Laufstreifen versehen sind. Der Reifen ist derart am Fahrzeug zu montieren, dass sich der Innenbereich näher zur Fahrzeuglängsachse befindet. Im Außenbereich eines solchen Laufstreifens werden gemäß der Erfindung ausgeführte Spikes derart angeordnet, dass sich der breitere Abschnitt des Spikepins laufstreifenaußenseitig befindet.

### Bezugsziffernliste

- 1: Spikepin
- 2: Oberteil
- 2a: Oberfläche
- 3: Unterteil
- 4: Symmetrieebene
- 5: Begrenzungsfläche
- 6: Begrenzungsfläche
- 7: Begrenzungsfläche
- 7a, 7b: Abschnitt
- 8: Begrenzungsfläche
- 8a, 8b: Abschnitt
- 9: Wölbung
- 9a: Plateau
- 10a, 10b: Rundung
- 11: Rundung
- 12: Begrenzungsfläche
- 13: Wölbung
- 13a: Plateau
- 14: Wölbung
- 14a: Plateau
- 15: Wölbung
- 15a: Plateau
- 16: Wölbung
- b: Breite
- l: Länge
- Q: Querrichtung
- U: Umfangsrichtung

## Patentansprüche

1. Spike für einen Fahrzeugreifen mit einem Spikekörper und einem in diesen eingesetzten Spikepin (1), welcher einen aus dem Spikekörper zumindest zum Teil herausragenden oder diesen überragenden Oberteil (2) mit einer eine Abrollfläche bildenden Oberseite (2a) aufweist, wobei der Oberteil (2) ein Körper ist, dessen Mantelfläche der Außenkontur der Oberseite (2a) folgt,
wobei der Oberteil (2) des Spikepins (1) ein in Draufsicht auf seine Oberseite (2a) langgestreckter Körper ist, mit einer Länge (1), die das 1,3- bis 2,4-Fache seiner größten Breite (b) beträgt, welcher Körper über zumindest die Hälfte seiner Länge (1) kontinuierlich breiter wird und entweder keine oder nur eine Symmetrieebene (4) aufweist, welche den Oberteil (2) bzw. den Spikepin (1) senkrecht zur Oberseite (2a) sowie in Längsrichtung des Oberteiles (2) bzw. Spikepins (1) halbiert.
**dadurch gekennzeichnet,**
**dass** der Oberteil (2) des Spikepins (1) über zumindest 65 % seiner Länge (1) kontinuierlich breiter wird.

2. Spike nach Anspruch 1, **dadurch gekennzeichnet, dass** der Oberteil (2) zumindest drei Eckbereiche aufweist, wobei zumindest ein Eckbereich, insbesondere sämtliche Eckbereiche, von einer Rundung (10a, 10b, 11) begrenzt ist bzw. sind.

3. Spike nach Anspruch 1 oder 2, **dadurch gekennzeichnet, dass** der Oberteil (2) an einem seiner der Längserstreckung zugeordneten Enden eine Breite aufweist, die zumindest im Wesentlichen seiner größten Breite (b) entspricht, wobei der Oberteil (2) in diesem Bereich von einer Begrenzungsfläche (5) begrenzt ist, die, in Draufsicht betrachtet, im Wesentlichen senkrecht zur Symmetrieebene (4) des Oberteils (2) verläuft.

4. Spike nach einem der Ansprüche 1 bis 3, **dadurch gekennzeichnet, dass** zumindest eine der Begrenzungsflächen (5, 6, 7, 8, 12) des Oberteils (2) konvex oder konkav gewölbt ist.

5. Spike nach einem der Ansprüche 1 bis 4, **dadurch gekennzeichnet, dass** der Oberteil (2) zumindest beidseitig seiner Symmetrieebene (4) Begrenzungsflächen (7, 8) aufweist, die konkav gewölbt sind.

6. Spike nach einem der Ansprüche 1 bis 5, **dadurch gekennzeichnet, dass** der Oberteil (2) in Draufsicht dreieckähnlich und mit einer Symmetrieebene (4) ausgeführt ist.

7. Spike nach einem der Ansprüche 1 bis 5, **dadurch gekennzeichnet, dass** der Oberteil (2) in Draufsicht deltoidförmig oder deltoidähnlich und mit einer Symmetrieebene (4) ausgeführt ist.

8. Spike nach einem der Ansprüche 1 bis 5, **dadurch gekennzeichnet, dass** der Oberteil (2) in Draufsicht tropfenähnlich und mit einer Symmetrieebene (4) ausgeführt ist.

9. Fahrzeugluftreifen mit einem Laufstreifen, in welchem Spikes gemäß einem oder mehreren der Ansprüche 1 bis 8 derart eingesetzt sind, dass die Längserstreckung des Oberteils (2) des Spikepins (1) der Querrichtung (Q) des Laufstreifens zugeordnet ist.

10. Fahrzeugluftreifen nach Anspruch 9, **dadurch gekennzeichnet, dass** sich der Oberteil (2) des Spikepins (1) bzw. die Symmetrieebene (4) des Spikepins (1) parallel zur Querrichtung (Q) erstreckt.

11. Fahrzeugluftreifen nach Anspruch 9, **dadurch gekennzeichnet, dass** sich der Oberteil (2) des Spikepins (1) bzw. die Symmetrieebene (4) des Spikepins (1) unter einem Winkel von bis zu ± 35 ° zur Querrichtung (Q) erstreckt.

12. Fahrzeugluftreifen nach einem der Ansprüche 9 bis 11 mit einem asymmetrisch ausgeführten Laufstreifen, welcher einen der Fahrzeuglängsachse zugewandten Innenbereich und einen von dieser abgewandten Außenbereich aufweist, wobei Außen- und Innenbereich unterschiedlich ausgestaltete Profilstrukturen aufweisen, **dadurch gekennzeichnet, dass** die Spikepins der im Außenbereich des Laufstreifens angeordneten Spikes mit ihrer breiteren Seite dem Laufstreifenrand näher sind.

## Claims

1. Spike for a vehicle tyre, having a spike body and a spike pin (1) inserted therein, which spike pin has an upper part (2) which at least partially projects out of or projects beyond the spike body and which has a top side (2a) which forms a rolling surface, wherein the upper part (2) is a body whose shell surface follows the outer contour of the top side (2a),
wherein the upper part (2) of the spike pin (1) is a body which is elongate in plan view of its top side (2a), having a length (l) which amounts to 1.3 to 2.4 times its greatest width (b), which body becomes continuously wider over at least half of its length (l) and has either no or only one plane of symmetry (4) which bisects the upper part (2) or the spike pin (1) perpendicular to the top side (2a) and in the longitudinal direction of the upper part (2) or spike pin (1),
**characterized**
**in that** the upper part (2) of the spike pin (1) becomes continuously wider over at least 65% of its length (l).

2. Spike according to Claim 1, **characterized in that** the upper part (2) has at least three corner regions, wherein at least one corner region, in particular all corner regions, is or are delimited by a rounding (10a, 10b, 11).

3. Spike according to Claim 1 or 2, **characterized in that** the upper part (2), at one of its ends assigned to the longitudinal extent, has a width which at least substantially corresponds to its greatest width (b), wherein the upper part (2) is delimited in said region by a delimiting surface (5) which, as seen in plan view, runs substantially perpendicular to the plane of symmetry (4) of the upper part (2).

4. Spike according to one of Claims 1 to 3, **characterized in that** at least one of the delimiting surfaces (5, 6, 7, 8, 12) of the upper part (2) is convexly or concavely curved.

5. Spike according to one of Claims 1 to 4, **characterized in that** the upper part (2), at least on both sides of its plane of symmetry (4), has delimiting surfaces (7, 8) which are concavely curved.

6. Spike according to one of Claims 1 to 5, **characterized in that** the upper part (2), in plan view, is of triangle-like form with a plane of symmetry (4).

7. Spike according to one of Claims 1 to 5, **characterized in that** the upper part (2), in plan view, is of deltoid-shaped or deltoid-like form with a plane of symmetry (4).

8. Spike according to one of Claims 1 to 5, **characterized in that** the upper part (2), in plan view, is of droplet-like form with a plane of symmetry (4).

9. Pneumatic vehicle tyre, having a tread in which spikes according to one or more of Claims 1 to 8 are inserted such that the longitudinal extent of the upper part (2) of the spike pin (1) is assigned to the transverse direction (Q) of the tread.

10. Pneumatic vehicle tyre according to Claim 9, **characterized in that** the upper part (2) of the spike pin (1) or the plane of symmetry (4) of the spike pin (1) extends parallel to the transverse direction (Q).

11. Pneumatic vehicle tyre according to Claim 9, **characterized in that** the upper part (2) of the spike pin (1) or the plane of symmetry (4) of the spike pin (1) extends at an angle of up to ± 35° with respect to the transverse direction (Q).

12. Pneumatic vehicle tyre according to one of Claims 9 to 11, having an asymmetrically designed tread which has an inner region facing towards the vehicle longitudinal axis and an outer region averted from said vehicle longitudinal axis, wherein the outer and inner region have differently designed profile structures, **characterized in that** the spike pins of the spikes arranged in the outer region of the tread are, with their relatively wide side, closer to the tread edge.

## Revendications

1. Crampon pour un véhicule comprenant un corps de crampon et une pointe de crampon (1) insérée dans celui-ci, qui présente une partie supérieure (2) faisant saillie au moins en partie hors du corps de crampon ou dépassant celui-ci, avec un côté supérieur (2a) formant une surface de roulement, la partie supérieure (2) étant un corps dont la surface d'enveloppe suit le contour extérieur du côté supérieur (2a),
la partie supérieure (2) de la pointe de crampon (1) étant un corps allongé sur son côté supérieur (2a) en vue de dessus, avec une longueur (l) qui vaut 1,3 à 2,4 fois sa plus grande largeur (b), lequel corps est plus large en continu sur au moins la moitié de sa longueur (l) et ne présente pas de plan de symétrie ou seulement un seul plan de symétrie (4) qui coupe la partie supérieure (2) ou la pointe de crampon (1) en deux perpendiculairement au côté supérieur (2a) et dans la direction longitudinale de la partie supérieure (2) ou de la pointe de crampon (1),
**caractérisé en ce que**
la partie supérieure (2) de la pointe de crampon (1) est plus large en continu sur au moins 65 % de sa longueur (l).

2. Crampon selon la revendication 1, **caractérisé en ce que** la partie supérieure (2) présente au moins trois régions de coin, au moins une région de coin, en particulier toutes les régions de coin, étant limitées par un arrondi (10a, 10b, 11).

3. Crampon selon la revendication 1 ou 2, **caractérisé en ce que** la partie supérieure (2) présente, au niveau d'une de ses extrémités associées à l'étendue longitudinale, une largeur qui correspond au moins essentiellement à sa plus grande largeur (b), la partie supérieure (2) étant limitée dans cette région par une surface de limitation (5) qui, en vue de dessus, s'étend essentiellement perpendiculairement au plan de symétrie (4) de la partie supérieure (2).

4. Crampon selon l'une quelconque des revendications 1 à 3, **caractérisé en ce qu'**au moins l'une des surfaces de limitation (5, 6, 7, 8, 12) de la partie supérieure (2) présente une courbure convexe ou concave.

5. Crampon selon l'une quelconque des revendications 1 à 4, **caractérisé en ce que** la partie supérieure (2) présente au moins, des deux côtés de son plan de symétrie (4), des surfaces de limitation (7, 8) qui présentent une courbure concave.

6. Crampon selon l'une quelconque des revendications 1 à 5, **caractérisé en ce que** la partie supérieure (2) est réalisée en vue de dessus de manière analogue à un triangle et avec un plan de symétrie (4).

7. Crampon selon l'une quelconque des revendications 1 à 5, **caractérisé en ce que** la partie supérieure (2) est réalisée en vue de dessus en forme de deltoïde ou de manière analogue à un deltoïde et avec un plan de symétrie (4).

8. Crampon selon l'une quelconque des revendications 1 à 5, **caractérisé en ce que** la partie supérieure (2) est réalisée en vue de dessus de manière analogue à une goutte et avec un plan de symétrie (4).

9. Pneumatique de véhicule comprenant une bande de roulement dans laquelle des crampons selon l'une quelconque ou plusieurs des revendications 1 à 8 sont insérés de telle sorte que l'étendue longitudinale de la partie supérieure (2) de la pointe de crampon (1) soit associée à la direction transversale (Q) de la bande de roulement.

10. Pneumatique de véhicule selon la revendication 9, **caractérisé en ce que** la partie supérieure (2) de la pointe de crampon (1) ou le plan de symétrie (4) de la pointe de crampon (1) s'étend parallèlement à la direction transversale (Q).

11. Pneumatique de véhicule selon la revendication 9, **caractérisé en ce que** la partie supérieure (2) de la pointe de crampon (1) ou le plan de symétrie (4) de la pointe de crampon (1) s'étend suivant un angle allant jusqu'à +/- 35° par rapport à la direction transversale (Q).

12. Pneumatique de véhicule selon l'une quelconque des revendications 9 à 11, comprenant une bande de roulement réalisée de manière asymétrique, qui présente une région intérieure tournée vers l'axe longitudinal du véhicule et une région extérieure opposée à celle-ci, la région extérieure et la région intérieure présentant des structures profilées de configurations différentes, **caractérisé en ce que** les pointes de crampon des crampons disposés dans la région extérieure de la bande de roulement sont plus proches par leur côté plus large du bord de la bande de roulement.
